(19) Europäisches Patentamt
European Patent Office
Office européen des brevets

(11) Publication number: **0 141 621**
**B1**

(12) # EUROPEAN PATENT SPECIFICATION

(45) Date of publication of patent specification: **15.06.88**

(51) Int. Cl.$^4$: **G 01 C 19/56**

(21) Application number: **84307330.5**

(22) Date of filing: **25.10.84**

(54) **Vibratory rotational sensor.**

(30) Priority: **31.10.83 US 546826**

(43) Date of publication of application:
**15.05.85 Bulletin 85/20**

(45) Publication of the grant of the patent:
**15.06.88 Bulletin 88/24**

(84) Designated Contracting States:
**DE FR GB IT**

(56) References cited:
**US-A-4 157 041**

(73) Proprietor: **GENERAL MOTORS CORPORATION**
**General Motors Building 3044 West Grand Boulevard**
**Detroit Michigan 48202 (US)**

(72) Inventor: **Loper, Edward J., Jr.**
**1042 Kellogg Avenue**
**Santa Barbara California 93111 (US)**
Inventor: **Lynch, David D.**
**5442 Berkeley Road**
**Santa Barbara California 93111 (US)**

(74) Representative: **Denton, Michael John et al**
**Patent Section - Luton Office (F6) Vauxhall Motors Limited P.O. Box 3 Kimpton Road**
**Luton Bedfordshire LU2 0SY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to vibratory rotation sensors, and more particularly to a sensor of the 'vibrating bell' type referred to as a sonic gyros, applicable to navigational systems. Such sonic gyros are disclosed in US—A—3 625 067, US—A—3 656 354, US—A—3 678 762, US—A—3 719 074 and US—A—4 157 041.

From US—A—4 157 041, it is known to provide a vibratory rotation sensor in the form of a hemispherical resonator gyro (HRG). The gyro consists of three principal fused quartz parts, a forcer, a hemispherical resonator and a pickoff, joined together with indium and enclosed in a vacuum metal housing. This type of gyro is also disclosed in 'The HRG: A new low-noise interial rotation sensor'. Proc. 16th Jt. SERVICES DATA EXCHANGE FOR INERTIAL SYSTEMS, Los geles, CA, 16 - 18 November 1982 by E. J. Loper and D. D. Lynch.

The present invention is concerned with providing a vibratory rotation sensor which has an improved error detection, which can operate for a limited time after electrical power failure, and which is unaffected by nuclear effects.

To this end a vibratory rotation sensor in accordance with the present invention is characterised by the features specified in the characterising portion of claim 1.

In the drawings:-

Figure 1 is an exploded view of the principal components of a vibratory rotation sensor in accordance with the invention;

Figure 2 illustrates the inertial sensing mechanism of the sensor in Figure 1;

Figure 3 illustrates the resonator mass distribution and normal mode axes of the sensor in Figure 1;

Figure 4 illustrates the ring forcer operation of the sensor in Figure 1;

Figure 5 is a cross-sectional view of the sensor in Figure 1;

Figure 6 illustrates the housing oriented drift due to asymmetric damping of the sensor in Figure 1;

Figure 7 is a pictorial representation of the electrode structure;

Figure 8 is an overall block diagram of the signal processing and control circuitry of the present invention; and

Figures 9A to 9F are more detailed block diagrams of the circuitry in Figure 8.

Referring to Figures 1 and 5, the vibratory rotation sensor is in the form of a hemispherical resonator gyro 10 comprising a forcer 12, a hemispherical resonator 14 and a pickoff 16, all of fused quartz, joined together with indium and enclosed in a vacuum metal housing 18.

The forcer 12 contains a ring forcer electrode 20, used to sustain the resonator's 14 vibration at constant amplitude, and the sixteen discrete forcer electrodes 22, used to suppress quadrature vibration of the resonator. The pickoff 16 contains the eight pickoff electrodes 24 used to sense the azimuth orientation of the resonator's 14 vibration pattern.

The hemispherical resonator 14 is formed with a stem 26 that passes through the hemisphere 28 and is mounted at each end ("double-stem" resonator). The resonator stem 26 serves two purposes. It provides a means for supporting the resonator 14 with minimal damping of its vibratory motion, and it provides separate electrical connections to the inner 30 and outer 32 hemispherical surfaces. The length of the stem 26 is chosen so that the mounting surfaces are more than three stem diameters removed from the transition area between the stem and the hemisphere.

The forcer electrodes 22 address the outer surface 32 of the hemisphere 28, and the shape of the discrete electrodes 22 is circular. A conductive area 34 surrounds the discrete electrodes 22 and separate them from the ring forcer electrode 20. This conductive surface 34 continues to the outside metallized area of the forcer where it is connected to ground, hence the name "ground plane". Its purpose is to reduce the interelectrode capacitive coupling. The circular form of the discrete electrodes 22 also reduces the interelectrode coupling and provides a shape that can more easily be located and formed with adequate precision.

The pick-off electrodes 24 address the inner surface 30 of the resonator 14 and are a circular shape. As is the case with the discrete electrodes 22, the circular shape allows them to be formed using a rotary tool which is a relatively expensive and accurate process.

The conductive area of each discrete forcer electrode 22 is carried to the rim 36 of the forcer housing 38 (the surface at which pick-off and forcer housings are joined) and thence across the rim 40 of the pick-off housing 42 to its outside flat surface 44. Circuitry is plated on this flat surface 44 to provide the desired interconnections between discrete electrodes 22 and to carry the leads to their metal socket terminals 46. The electrical connection to the inner surface 30 of the resonator is also made using a conductor plated on the outside flat surface of the pick-off housing 42 extending from the resonator stem to a metal socket (not shown). The electrical connection to each pick-off electrode 24 is carried through a hole in its center by a wire that attaches to the inside of a quartz tube 48. The tube 48 passes through the pick-off housing 42 to its flat outer surface and provides a coaxial conductor for the pick-off signal (inside surface of the tube) and its guard (outside surface of the tube). This tube 48 terminates in a metal coaxial socket 50.

The flat outer surface 44 of the pick-off housing 42 carries two circuit arrays, one having eight coaxial sockets 50, and the other, eight single-conductor sockets 46. Connections from these sockets are carried through the metal vacuum housing 18 by eight metal pin feedthroughs 52, and eight coaxial feedthroughs 54 built into the pick-off cover 56 of the vacuum case.

In addition to the sixteen electrical feedthroughs 52, 54 of the pick-off cover 56, there are two single-pin feedthroughs (58, not shown) in the main vacuum case 18 to bring out the connection from the ring forcer electrode and the one from the resonator outside surface. The latter feedthrough is not shown.

A gas getter 58 is used to maintain a high vacuum inside the gyro case in order to reduce aerodynamic damping of the resonator 14 to an acceptable level. The getter 58, a commercially available device of sintered zirconium, is preactivated and sealed inside a titanium capsule. The capsule is designed so that it can be opened to the inside volume of the vacuum housing 18 after final sealing of the gyro 10. This feature provides the opportunity to observe the rate at which internal gas pressure builds up following sealing of the gyro 10 so that the quality of the hermetic seal can be determined. The internal gas pressure can be estimated from a measurement of resonator 14 damping time, and the rate at which pressure builds up can then be used to predict the useful life of the gyro 10. (After the getter 58 is opened to the internal volume of the gyro, the gas pressure immediately drops to a low value, so that no further information about seal quality can be obtained until the getter's capacity starts to be exceeded). The getter 58 penetrator is shown in Figure 5. It consists of a hardened steel point 60 located near a thin membrane section 62 of the capsule inner wall. The penetrator 60 can be made to puncture the membrane 62 by applying pressure to the penetrator mounting 64 from outside the getter 58.

Figure 2 illustrates how the chosen vibration mode responds to inertial rotation of the resonator 14 about its polar axis. Assume that the vibration pattern antinodes are initially aligned with the case reference notch 66, as shown in Figure 2a. During a ninety-degree clockwise rotation of the resonator 14, the antinodes will precess relative to the case by approximately 27 degrees in the clockwise direction. The relative precession rate, or angular gain, is very nearly three-tenths, and is a geometric constant of the resonator 14.

Precession of the vibration pattern in response to an input inertial rate can be described in an alternate, but equivalent, manner. The inertial rotation can be thought of as causing the amplitude of the vibration pattern in Figure 2-a to decrease and a new component pattern to build up whose antinodes lie 45 degrees from the original pattern antinodes; that is, whose antinodes coincide with the nodes of the original pattern. The superposition of these two pattern components produces the resultant pattern. In Figure 2-b, for example, the superposition of the two pattern components produces a resultant whose antinodes lie 27 degrees from the original pattern antinodes.

The vibration pattern may be considered to be made up of components along an arbitrarily chosen pair of axes (Figure 7). The most convenient axes for describing vibration components are the pick-off electrode axes. There is a unique set of axes, however, that have the property that the components of the vibration pattern along them are uncoupled in the absence of rotation (and in the absence of certain perturbations that will be considered later). These are the so-called normal modes axes. Their location is determined by the resonator mass/stiffness variation in the circumferential direction. The normal mode axis locations can be visualized for the particularly simple mass distribution shown in Figure 3. A vibration pattern with antinodes along the axes through the added masses (the solid axes) will oscillate at a lower natural frequency than a pattern with antinodes along the dashed axes.

If a vibration pattern is established with antinodes not along either of the normal mode axis sets, each of its normal mode components will oscillate at its respective natural frequency. If the normal mode components were initially in phase, their phases would gradually separate at a rate equal to the difference of the natural frequencies. The transfer of energy between the normal mode components caused by rotation is responsible for the precession of the vibration pattern. This transfer is highly phase sensitive because rotation causes each normal mode to be forced at the frequency (and phase) of the other. The normal mode components of the vibration must therefore be kept in phase in order to insure a constant gyro scale factor. Preventing phase separation between these normal mode components is one of the essential gyro control functions.

When the phase separation between the normal mode components is small, the resulting vibration pattern is nearly identical with the pattern shown in Figure 2. The main difference is that, where the nodes should be, there is a small amplitude vibration in phase-quadrature to the main vibration. The amplitude of this quadrature vibration is proportional to the phase difference of the normal mode components. Means of suppressing this nodal quadrature vibration are discussed below.

The purpose of the HRG electronics is to drive and control the resonator vibration and to monitor the location of the pattern. The four major functions of the electronics are: (1) reference phase generation, (2) amplitude control, (3) quadrature suppression, and (4) pattern angle readout. Each of these functions are discussed below.

Pickoff Electrode Function

The eight pick-off electrodes 24 are shown in Figure 1. They address the resonator 14 across a small gap so that each electrode 24, together with the portion of the resonator addressed, constitutes a portion of a spherical capacitor. A dc reference voltage is maintained on the inner surface 30 of the resonator 14 so that the capacitance variations that occur as the resonator vibrates result in electrical signals proportional to the time-varying resonator displacements with respect to the pick-off electrodes. These eight pick-off signals are combined electrically to generate two signals (Ec, Es) proportional to the two independent components of vibration. If one of the pick-off electrodes is arbitrarily labeled the 0-degree electrode, one of the combined signals is obtained by summing the signals from the 0-degree and 180-degree electrodes and subtracting the sum of the signals from the 90-degree and 270-degree electrodes. The combined signal (Ec) obtained in this way (called the 0-degree signal) discriminates against rigid body motions of the resonator with respect to the electrodes. A similar combination of the remaining four electrode signals yields a combined signal (Es) representing the other independent vibration component (called the 45-degree signal).

Reference Phase Generator

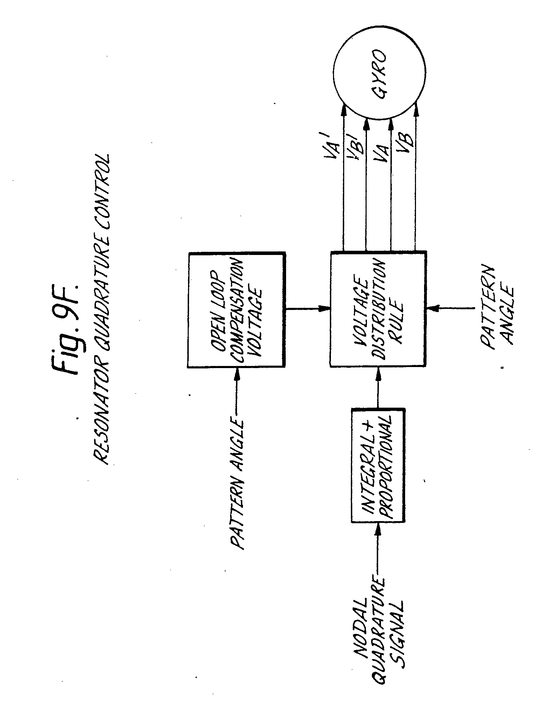

The combined electrode signals that represent the vibration pattern components along the O-degree and the 45-degree electrode axes are processed by demodulating them with respect to the signals generated by the reference phase generator. The parts of the 0-degree and the 45-degree components that are in phase with the reference are processed to derive an error signal for use in the amplitude control loop (Figure 9B) and to identify the location of the pattern. The quadrature parts of the combined pickoff electrode signals are transformed in a computer to generate a nodal quadrature signal and an antinodal quadrature signal. For example, the quadrature part of the 0-degree signal (COS QUAD) is multiplied by the cosine of twice the actual readout angle (COS 2θ) and is added to the quadrature part of the 45-degree signal (SIN QUAD) multiplied by the sine of twice the actual readout angle (SIN 2θ) to produce the antinodal quadrature signal. Similarly the nodal quadrature signal is produced by multiplying the COS QUAD by Sin 2θ and subtracting the product of SIN QUAD and Cos 2θ. θ is the vibration pattern precession angle. The nodal quadrature signal is used as the error signal in the quadrature control loop (Figure 9F) that keeps both components of the vibration in phase. The antinodal quadrature signal is used as the error signal for the phase-locked loop (Figure 9E) that keeps the phase of the reference phase generator locked to the phase of the vibration.

The resonator oscillation frequency has a temperature sensitivity of about 80 parts per million per degree Centigrade due to the temperature coefficient of Young's modulus of fused quartz. Since the reference phase generator is locked to the resonator, its frequency provides a direct measure of the temperature of the resonator and is used for thermal modeling.

Amplitude Control

The vibration is sustained at constant amplitude through the application of a square wave voltage to the ring electrode 20. The square wave timing is controlled by the reference phase generator. The voltage is on during the first and third quarters of the resonator's oscillation cycle, and off during the second and fourth as shown in Figure 4. Thus, a force is exerted on the resonator 14 during the time the amplitude is increasing, and no force is exerted on the resonator during the time the amplitude is decreasing. The net force per unit area exerted on the resonator is inversely proportional to the square of the local gap. Therefore, as the resonator's flexing motion carries it from its neutral (circular) shape to its fully flexed (elliptical) shape, the attractive force increases in the smaller gap regions by more than it decreases in the larger gap regions. The net force the ring electrode 20 exerts on the resonator 14 thus lies along the antinodal direction of the vibration pattern; hence, energy is supplied to make up for damping without causing the pattern to drift toward a particular location.

The error signal for the amplitude control loop is the difference between a reference voltage and a voltage proportional to the sum of the squares of the 0-degree and 45-degree vibration components.

Quadrature Control

Two normal modes having slightly different frequencies result from slight variations in resonator characteristics having four-fold symmetry in the circumferential direction, as, for example, the mass variations in Figure 3. The strategy of quadrature control adopted for the HRG is to introduce electrical spring forces to shift the normal mode axes to coincide with the vibration pattern.

Voltages are placed on discrete forcer electrodes in groups of four. In Figure 7, for example, arbitrarily calling one of the electrodes the O-degree electrode, a common voltage could be placed on the O-degree, 90-degree, 180-degree, and 270-degree electrodes (A1 electrodes). Placing common voltages on such a set of four electrodes contributes to the definition of the normal modes, not because the forces act like added mass as in Figure 3, but because they act like added "springs"; like added negative springs, in fact. Just as in the case of the ring forcer, the force per unit area on the resonator in the vicinity of an electrode at a different electrical potential is attractive, with a magnitude proportional to the square of the voltage and inversely proportional to the square of the local gap. With four symmetrically located electrodes at a common potential, the force per unit area on an undeformed resonator is radially outward and there is no net force tending to excite the deformation corresponding to the n=2 vibration mode. When the resonator deforms, however, there is a net force tending to make it deform still further. That is, the force that the four electrodes exert on the vibrating resonator is a negative spring force, or negative stiffness.

The quadrature control loop (Figure 9F) functions as follows. As described in the Reference phase Generator paragraphs above, the quadrature parts of the combined pick-off electrode signals are transformed in the computer to generate a dc signal proportional to the amplitude of the quadrature vibration component at the nodes of the main pattern. This nodal quadrature error signal is amplified with high gain and distributed on the discrete forcer electrodes 22 in such a way as to result in a negative electrical spring along an axis set 22.5 degrees from the pattern antinodes. When the steady state is reached (in a short time because of the high gain), this electrical spring causes the normal mode axes, including the spring contributions, to coincide with the vibration pattern nodes and antinodes, and the nodal quadrature vibration is driven to zero.

The effectiveness in suppressing growth of quadrature vibration of a negative electrical spring along an axis set 22.5 degrees from the pattern antinodes may be understood from a slightly different point of view. It was explained earlier that, when the phase difference between the normal mode components of the vibration is small, the pattern is like that of Figure 2, with the main difference being that where the nodes should be there is a small amplitude vibration in phase-quadrature to the main vibration. An equivalent description, valid when the phase difference between the normal mode components is small, is that the vibration is composed of two components. One of the components has antinodes along an axis set 22.5 degrees to the right of the antinodes of the main pattern while the other component has antinodes 22.5 degrees to the left of the main pattern. The two components are equal in amplitude (O.707 times the amplitude of the main pattern) and have a phase difference proportional to the phase difference of the normal mode components and, therefore, proportional to the nodal quadrature signal. To prevent growth of nodal quadrature vibration, then, it suffices to cause the two 22.5-degree pattern components to oscillate at the same frequency and in phase with each other. The negative electrical spring is therefore applied along the 22.5-degree axis set corresponding to the component oscillating at the higher frequency. The quadrature control loop (Figure 9F) adjusts the magnitude of the negative spring to reduce the frequency of the one component to equal that of the other and to drive the phase difference to zero.

Readout

Generation of the pick-off electrode signals was described above under Pick-off Electrode Function. The signal processing involved in computing the location of the vibration pattern antinodes is shown in Figure 9a. The angle θ in Figure 9A is to be determined. It is the angle from the 0-degree pick-off electrode axes to the vibration pattern antinodal axes. (θ is 27 degrees in Figure 2-b). The 0-degree and the 45-degree signals are sinusoids varying at the vibration frequency, with amplitudes proportional to the vibration components along the 0-degree and 45-degree pick-off electrode axes, respectively.

The object of the processing is to determine the ratio of the amplitudes in order to identify θ. The sin 2θ and cos 2θ signals are first rectified to produce rectified sine wave pulse trains. These pulse trains are fed differentially into the integrator in the following manner. The pulse train of lesser amplitude is continuously fed into the integrator. The pulse train of greater amplitude is switched in such a way as to introduce only enough of the larger pulses into the integrator to keep it nearly balanced. At the end of a given sampling cycle, the ratio of the number of large pulses to the number of small pulses is a rough measure of the ratio of the signal amplitudes. The unbalance of the integrator at the end of the sampling cycle provides the additional information required for an accurate computation.

The damping of the vibration pattern arises from such mechanical sources as internal damping within the fused quartz resonator material, residual surface stresses remaining after resonator finishing operations, and damping arising at the bond region between the resonator and its metal coating. The resonator damping is only approximately uniform. Its variation in the circumferential direction gives rise to two distinct damping time constants. As in the case of mass variation, it is the fourth harmonic of the damping distribution that determines the location of the "normal" axes of damping and difference of their time constants. (Compare Figure 3 where the added lumps may be thought of as regions of added damping). These normal axes of damping do not generally coincide with the resonator's normal mass/stiffness mode axes and, in any case, the quadrature control loop (Figure 9F) continually adjusts the voltage on the discrete forcer electrodes so that the normal mode axes, including the electrical springs, coincide at each instant with the antinodal axes of the vibration pattern.

Asymmetric damping is one of the principal sources of drift in the HRG. In general, the vibration pattern antinodal axes do not coincide with either normal damping axis set, and the vibration pattern must be considered in terms of its components along the two normal damping axis sets. The amplitudes of these components decay at different rates. If T1 and T2 are the normal time constants, 1/T1 and 1/T2 are the normal component decay rates. The energy lost to damping is replenished by the ring forcer electrode as described above. The rate of energy replenishment is independent of the location of the vibration pattern antinodes. If T1 is the smaller time constant, because the T1 component is losing energy at a greater rate than the T2 component, the energy ultimately all ends up in the T2 component, which is the resonator's "preferred" (least damping) vibration pattern. The result is that the vibration pattern drifts toward its preferred location at a rate proportional to 1/T1-1/T2 and proportional to the sine of four times the difference angle between the existing pattern and its preferred location. The resulting housing-oriented drift is shown in Figure 6.

In the discussion of the quadrature control loop, it was assumed that the loop succeeded in reducing the quadrature vibration at the nodes of the main pattern to zero. In practice, a small residual quadrature vibration remains. This quadrature residual is the other principal drift source of the HRG.

The quadrature control loop suppresses quadrature by directing dc voltages to selected discrete forcer electrodes 22 to control the direction of the normal mode axes. It causes the normal mode axes to be aligned with the existing vibration pattern, but does not cause the normal mode frequencies to be equal. As a result, the vibration pattern and the reference phase generator oscillate at the one normal mode frequency while the residual nodal quadrature vibration oscillates at the other.

Quadrature is, however, defined in terms of demodulation with respect to the reference phase generator. Since the residual nodal quadrature is at a different frequency than the reference phase generator, it is interpreted as having a growing in-phase component, assuming that initially its phase was in quadrature with the reference phase generator signal. This growing in-phase component at the nodal location is, in effect, a rotation of the vibration pattern. The resultant drift rate is proportional to the product of the residual quadrature amplitude, the difference of the "natural" normal mode frequencies (that is, not including the electrical contributions), and the cosine of four times the angle between the existing vibration and the "natural" normal mode location.

The elastic spring force that restores the deformed resonator to its relaxed spherical shape is inherently nonlinear. The normal mode analysis described thus far is an analysis of linearized equations and applies to situations in which the vibration amplitudes are so small that nonlinear terms may be neglected. Under the conditions of operation of the HRG, the nonlinear terms are small, but not negligible. Their effect in perturbing the linear solutions must be taken into account.

To a first approximation, the nonlinearity makes the residual nodal quadrature vibration appear to have a higher natural frequency than the natural frequency of the main pattern. This effect is over and above any of the effects (fourfold symmetric mass variations and electric fields) discussed thus far. It gives rise to a drift by the same mechanism discussed in the last subsection. The major difference is that, since the effective spring for the nodal quadrature vibration appears always to be at the pattern node, the resultant drift magnitude is independent of pattern location; that is, it is a fixed bias drift. Its magnitude is proportional to the residual nodal quadrature vibration amplitude and to the square of the amplitude of the main pattern.

In the closed loop quadrature vibration control, dc voltages are placed on selected discrete forcer electrodes 22 so as to develop an electrical spring component along the axis set 22.5 degrees from the pattern antinodal axis set. This electrical spring component is adjusted by the loop so as to cause the normal mode axes to be aligned with the vibration pattern. The drift sensitivity to residual quadrature vibration arises because the resulting normal mode frequencies are not equal. The normal mode frequencies may be made equal and the drift sensitivity to residual quadrature vibration reduced to zero by applying an appropriate negative electrical spring component along the nodal axis set as a function of pattern angle.

The required nodal electrical spring component is determined in a calibration run by inserting a known amount of quadrature vibration and measuring the additional drift that results as a function of vibration pattern location. In this way, the electrical spring component required to match the normal mode frequencies is determined, including both the linear and the nonlinear influences. When this electrical spring component is applied, the drift sensitivity to quadrature motion is reduced to near zero. This desensitization to quadrature error greatly reduces what would otherwise be the principal cause of drift variability.

**Claim**

A vibratory rotation sensor comprising a resonator (14) capable of sustaining a vibration pattern in a plane perpendicular to an input axis, means (26) supporting said resonator along said input axis, means for initiating an elliptical vibration pattern in said resonator, forcer means including a circular forcer electrode (20) and first, second, third and fourth sets of discrete orthogonal forcer electrodes (22), said first and second sets of discrete forcer electrodes displaced one from the other by 45 degrees and defining first and second axis sets, said third and fourth sets of discrete forcer electrodes displaced one from the other by 45 degrees and defining third and fourth axis sets interposed between said first and second axis sets, pick-off means (16) responsive to resonator motion along said first and second axis sets and including first and second sets of discrete orthogonal pick-off electrodes (24), said pickoff means producing first and second combined pick-off signals (Ec, Es) that represent the vibration pattern components along said first and second axis sets, reference phase generator means for generating timing signals, characterised by means including said reference phase generator means for demodulating said first and second combined signals (Ec, Es) to derive first and second error signals, the first error signal representing the quadrature part of the first combined pick-off signal at the pattern node and the second error signal representing the quadrature part of the second combined pick-off signal at the pattern antinode, control means interconnected with said pickoff means and said forcer means and responsive to the nodal quadrature signal for maintaining components of vibration along said first and second axis sets in phase, and control means responsive to the antinodal quadrature signal for keeping the phase of the reference phase generator locked to the phase of vibration pattern.

**Patentanspruch**

Vibrierender Drehungssensor mit einem Resonator (14), der zur Aufrechterhaltung eines Vibrationsverlaufes in einer senkrecht zu einer Eingabeachse stehenden Ebene fähig ist, Mitteln (26), die den Resonator längs der Eingabeachse abstützen, Mitteln zur Errichtung eines elliptischen Vibrationsverlaufes bei dem Resonator, Treibermitteln einschließlich einer zirkularen Treiberelektrode (20) und ersten, zweiten, dritten und vierten Reihen von diskreten orthogonalen Treiberelektroden (22), wobei die ersten und zweiten Reihen von diskreten Treiberelektroden gegeneinander um 45$^0$ versetzt sind und erste und zweite Achsenreihen bestimmen, die dritten und vierten Reihen von diskreten Treiberelektroden gegeneinander von 45$^0$ versetzt sind und dritte und vierte Achsenreihen bestimmen, die zwischen den ersten und zweiten Achsenreihen eingesetzt sind, Abnahmemitteln (16), die auf eine Resonatorbewegung längs der ersten und zweiten Achsenreihen reagieren und erste und zweite Reihen von diskreten orthogonalen Abnahmeelektroden (24) enthalten, wobei die Abnahmemittel erste und zweite kombinierte Abnahmesignale (Ec, Es) erzeugen, die die Vibrationsverlaufs-Komponenten längs der ersten und zweiten Achsenreihen repräsentieren, Referenzphasengeneratormittel zum Erzeugen von Zeitgabesignalen, gekennzeichnet durch Mittel einschließlich dem Referenzphasengeneratormittel zum zweiten kombinierten Signale (Ec, Es) zum Ableiten erster und zweiter Fehlersignale, wobei das erste Fehlersignal den um 90$^0$ verschobenen Teil des ersten kombinierten Abnahmesignals an dem Verteilungsknoten repräsentiert und das zweite Fehlersignal den um 90$^0$ verschobenen Teil des zweiten kombinierten Abnahmesignales an dem Gegenknoten (Schwingungsbauch) der Verteilung, durch Steuermittel, die zwischen den Abnahmemitteln und den Treibermitteln angeschlossen sind und auf das um 90$^0$ phasenverschobene Knotensignal reagieren, um Vibrationskomponenten längs der ersten und zweiten Achsenreihen in Phase zu halten, und Steuermittel, die auf das um 90$^0$ verschobene Gegenknotensignal reagieren, um die phase des Referenzphasengenerators mit der Phase der Vibrationsverteilung verriegelt zu halten.

**Revendication**

Capteur vibratoire de rotation comprenant un résonateur (14) capable d'entretenir un diagramme de vibration dans un plan perpendiculaire à un axe d'entrée, un dispositif (26) de support du résonateur suivant l'axe d'entrée, un dispositif destiné à déclencher un diagramme de vibration elliptique dans le résonateur, un dispositif à organe d'application de force comprenant une électrode circulaire (20) d'organe d'application de force, et un premier, un second, un troisième et un quatrième jeu d'électrodes orthogonales séparées (22) d'organe d'application de force, le premier et le second jeu d'électrodes séparées d'organe d'application de force étant décalés l'un par rapport à l'autre de 45° et délimitant un premier et un second jeu d'axes, le troisième et le quatrième jeu d'électrodes séparées d'organe d'application de force étant décalés l'un par rapport à l'autre de 45° et délimitant un troisième et un quatrième jeu d'axes disposés entre le premier et le second jeu d'axes, un dispositif (16) à élément capteur sensible au mouvement du résonateur suivant le premier et le second jeu d'axes et comprenant un premier et un second jeu d'électrodes orthogonales séparées (24) d'élément capteur, le dispositif à élément capteur produisant des premiers et des seconds signaux combinés (Ec, Es) d'élément capteur qui représentent les composantes du diagramme de vibration suivant le premier et le second jeu d'axes, un dispositif générateur d'une phase de référence destiné à créer des signaux de synchronisation, caractérisé par un dispositif comprenant le dispositif générateur d'une phase de référence et destiné à démoduler les premiers et seconds signaux combinés (Ec, Es) afin qu'il dérive des premier et second signaux d'erreur, le premier signal d'erreur représentant la partie en quadrature du premier signal combiné d'élément capteur au noeud du diagramme et le second signal d'erreur représentant la partie en quadrature du second signal combiné d'élément capteur au ventre du diagramme, un dispositif de commande relié au dispositif à élément capteur et au dispositif à organe d'application de force et sensible au signal nodal en quadrature afin qu'il maintienne en phase les composantes de la vibration le long des premiers et seconds jeux d'axes, et un dispositif de commande sensible au signal antinodal en quadrature et destiné à maintenir la phase du générateur d'une phase de référence verrouillée sur la phase du diagramme de vibration.

Fig.1.

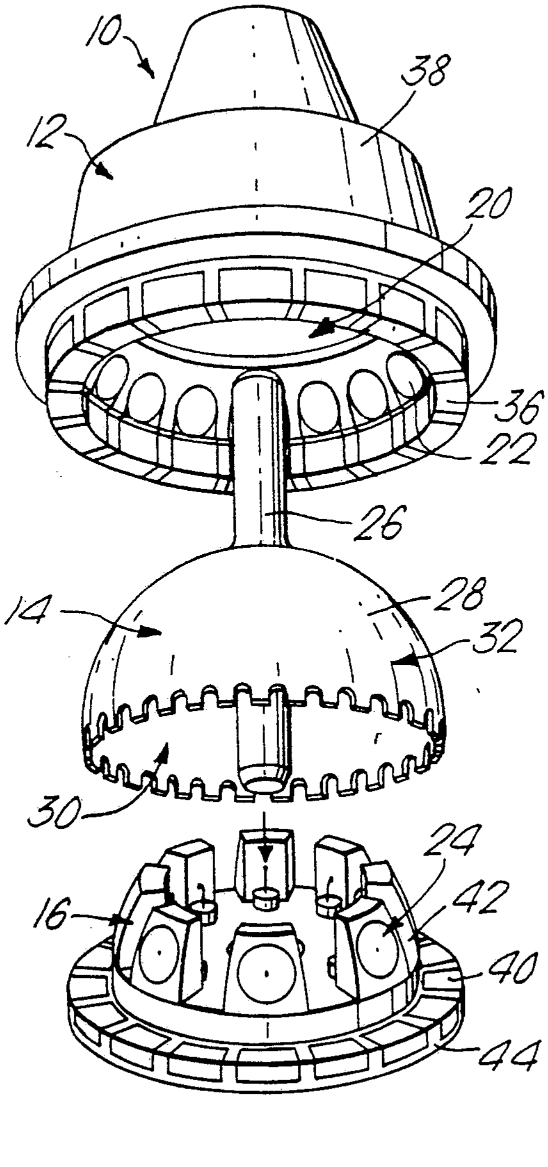

Fig. 2a.

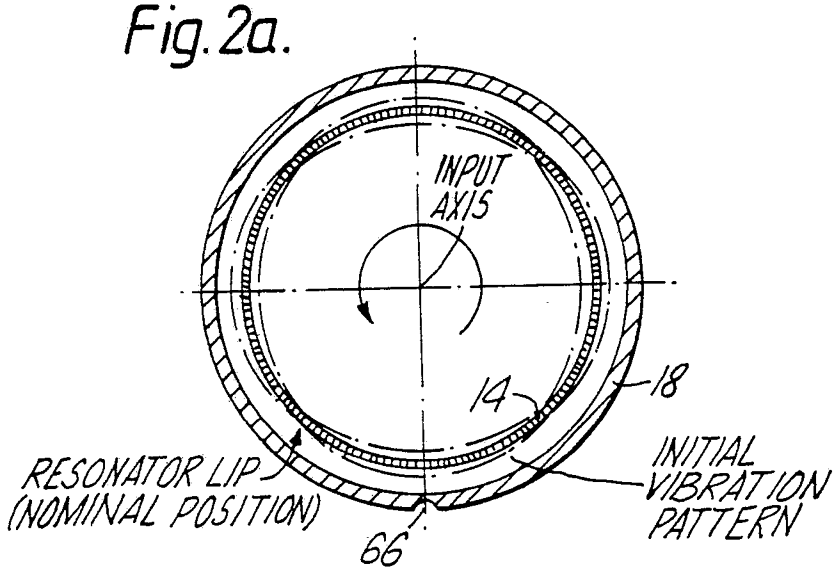
INPUT
AXIS
14
18
RESONATOR LIP
(NOMINAL POSITION)
66
INITIAL
VIBRATION
PATTERN

Fig. 2b.

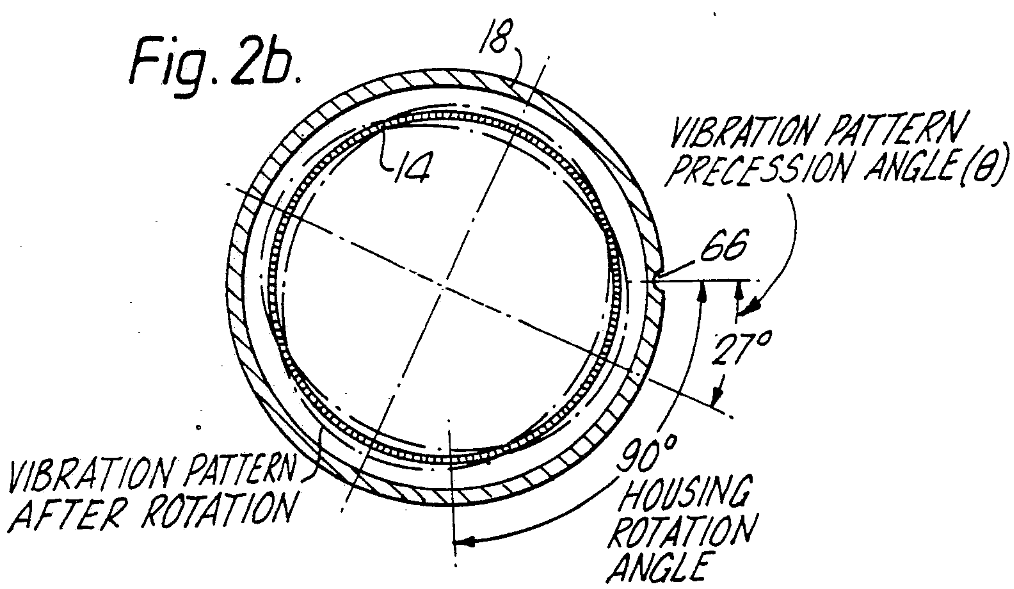
18
14
VIBRATION PATTERN
PRECESSION ANGLE (θ)
66
27°
90°
HOUSING
ROTATION
ANGLE
VIBRATION PATTERN
AFTER ROTATION

Fig. 3.

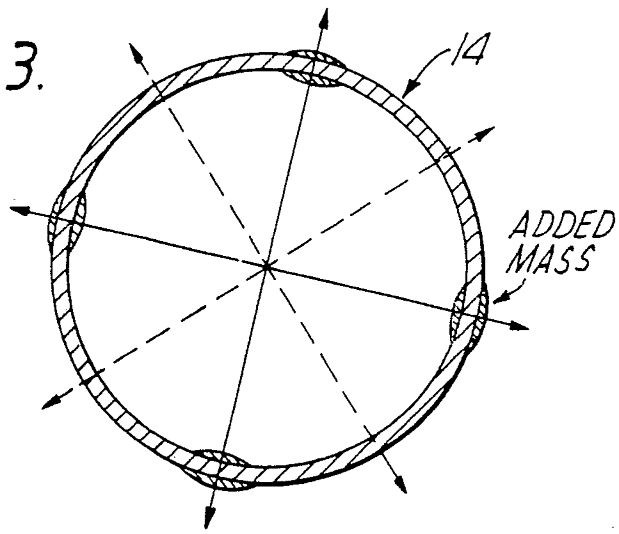
14
ADDED MASS

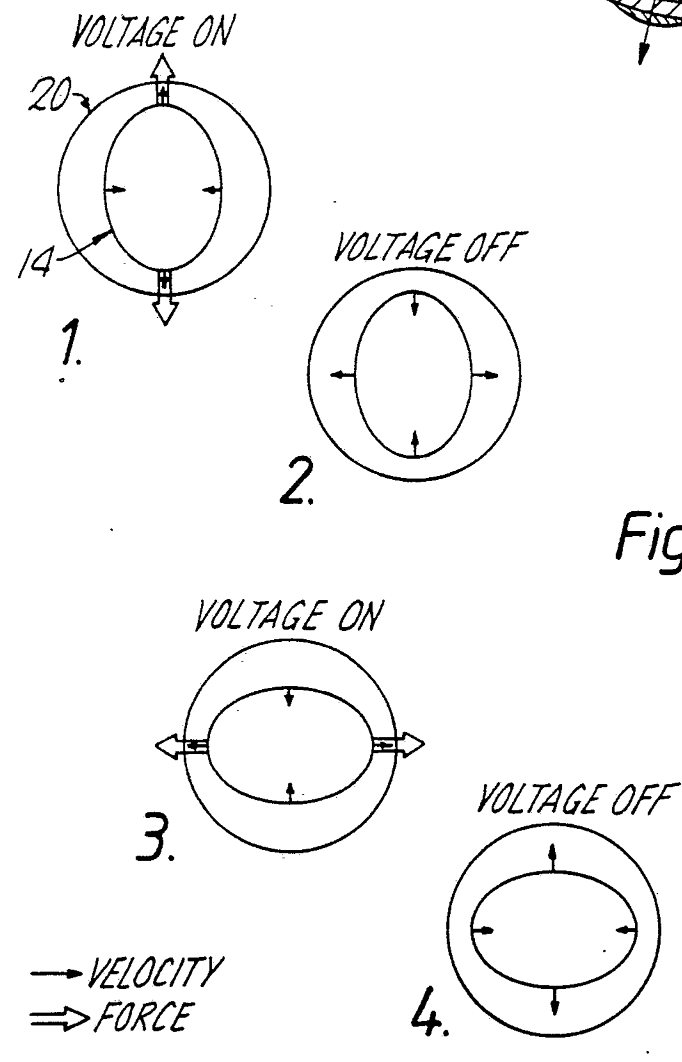
VOLTAGE ON
20
14
1.
VOLTAGE OFF
2.
VOLTAGE ON
3.
VOLTAGE OFF
4.
VELOCITY
FORCE

Fig. 4.

Fig.5.

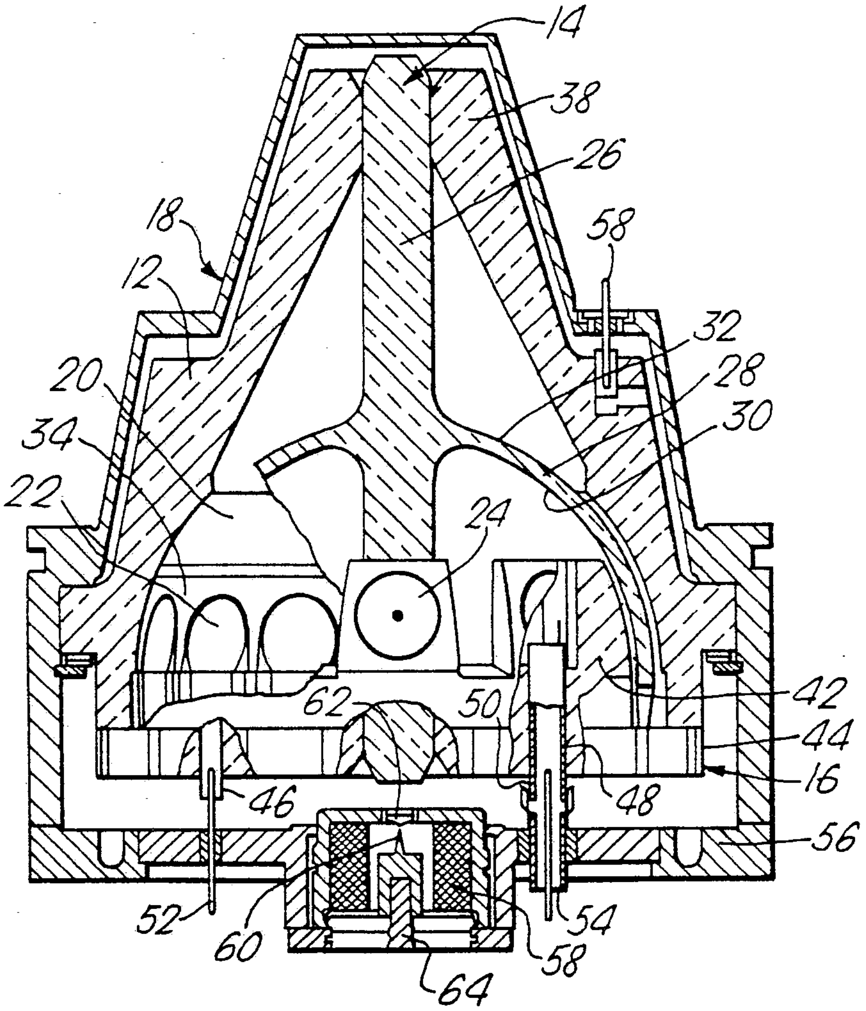

14
38
26
18
58
12
32
28
20
30
34
22
24
42
62
50
44
16
46
48
56
52
60
54
58
64

Fig.6.

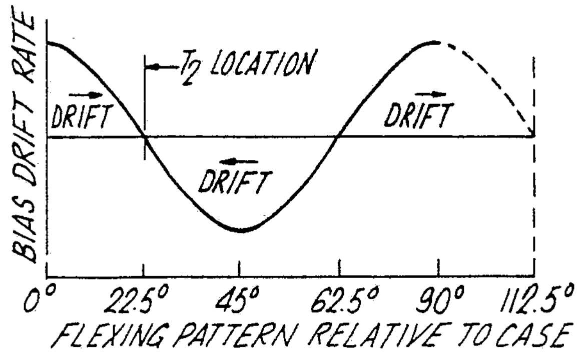
BIAS DRIFT RATE
T2 LOCATION
DRIFT
DRIFT
DRIFT
0°
22.5°
45°
62.5°
90°
112.5°
FLEXING PATTERN RELATIVE TO CASE

Fig.7.

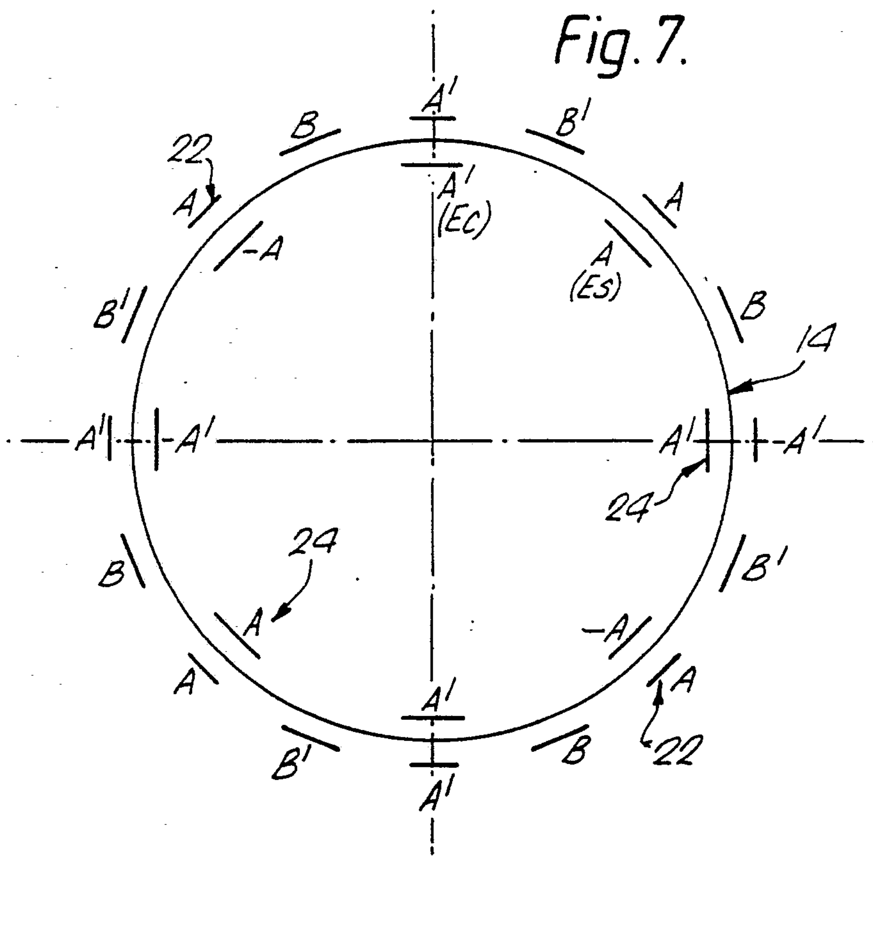
A'
B
B'
22
A
-A
A'
(Ec)
A
A
(Es)
B'
B
14
A'
A'
A'
A'
24
B
24
A
B'
-A
A
A
A'
A'
B'
B
22

Fig.8.

HEMISPHERICAL RESONATOR GYRO ELECTRONICS LOOPS

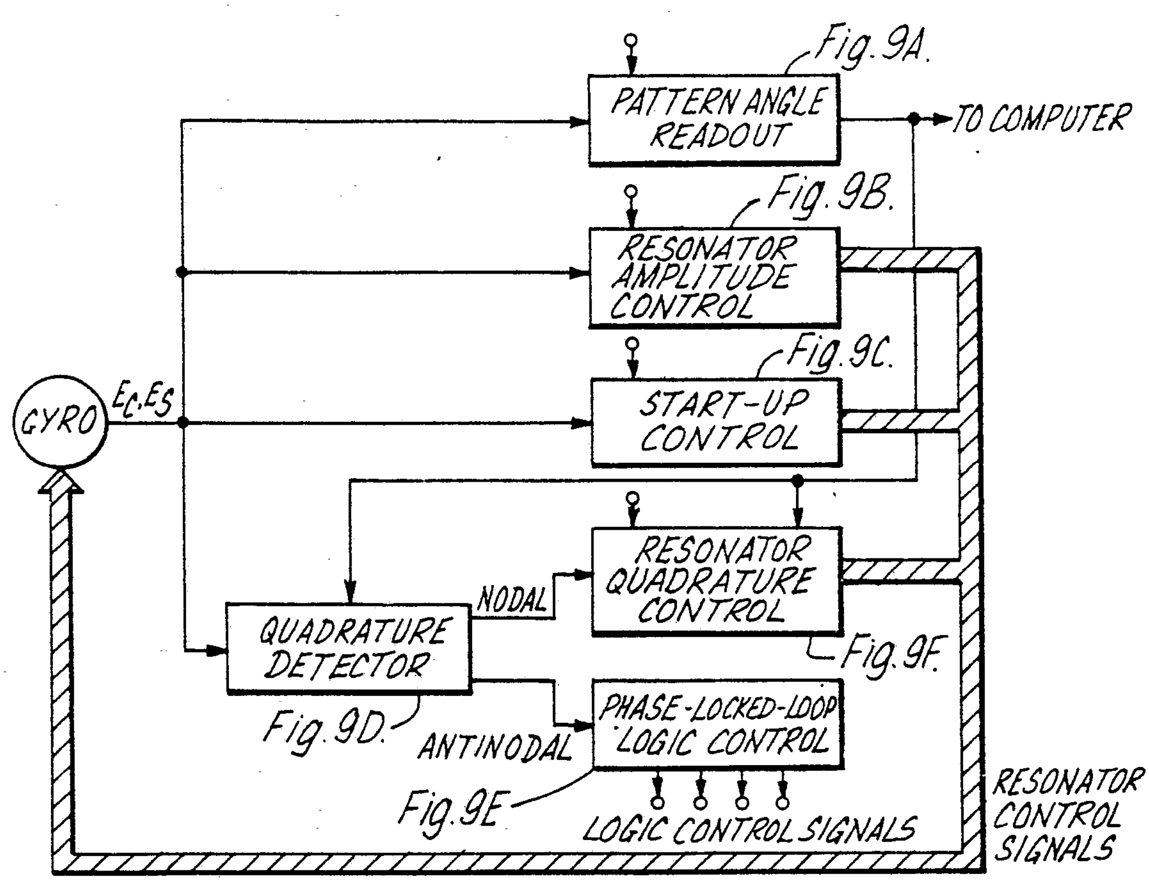

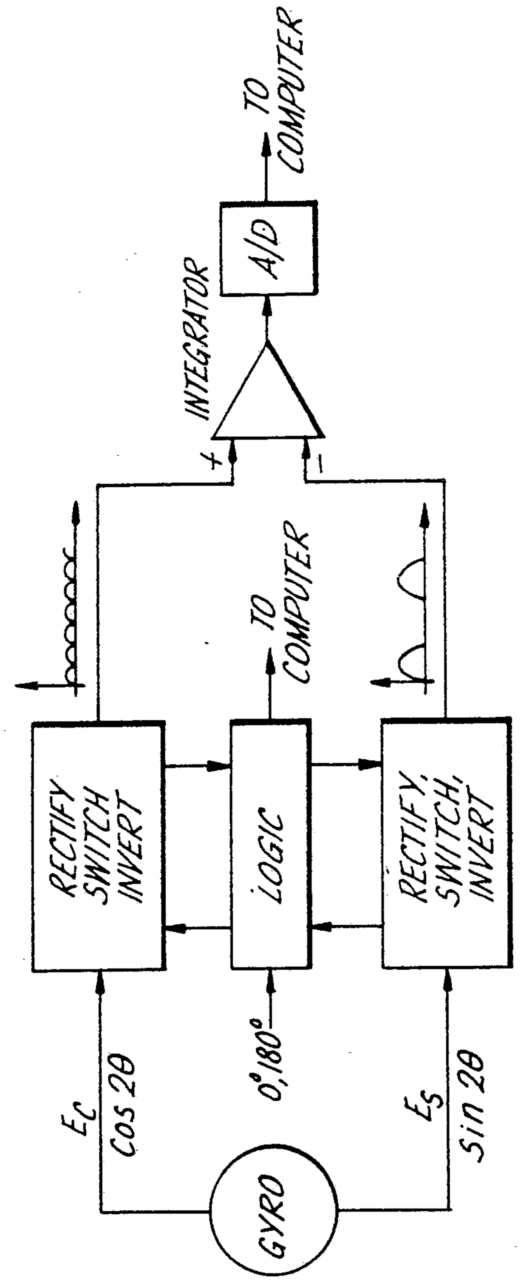


Fig.9A.

PATTERN ANGLE READOUTS

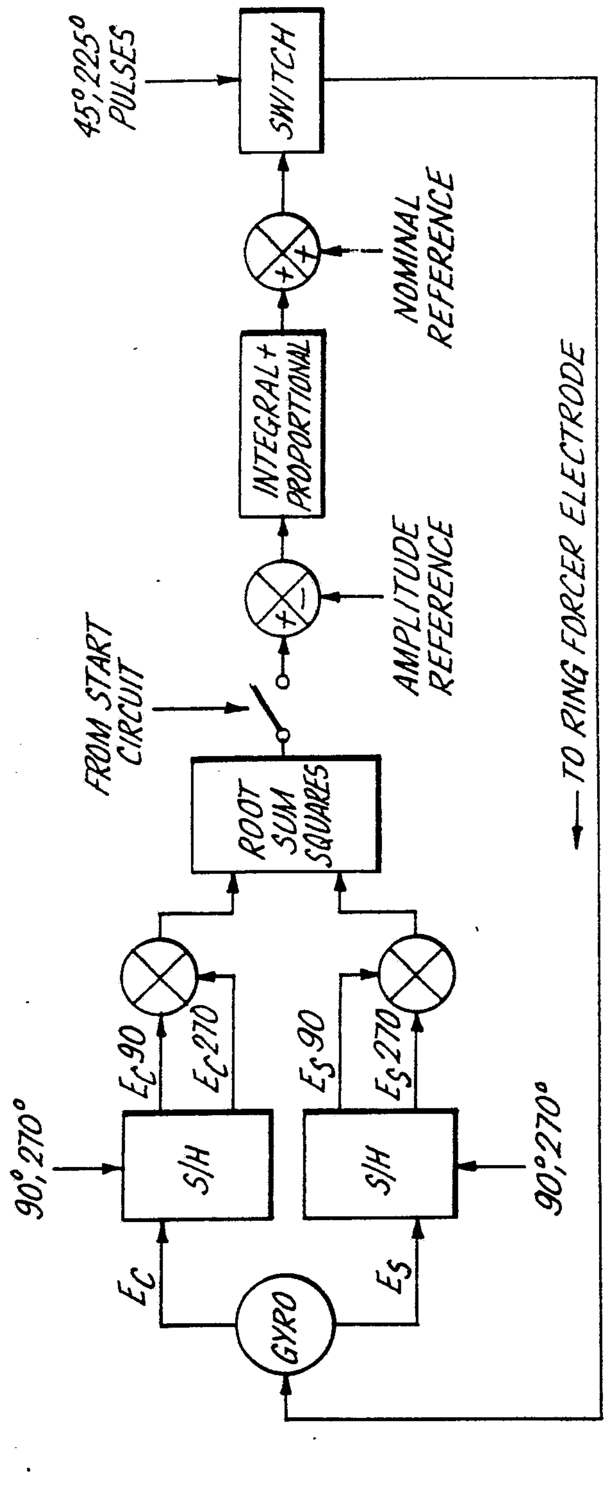


Fig.9B.

RESONATOR AMPLITUDE CONTROL

Fig.9C.

START CIRCUIT

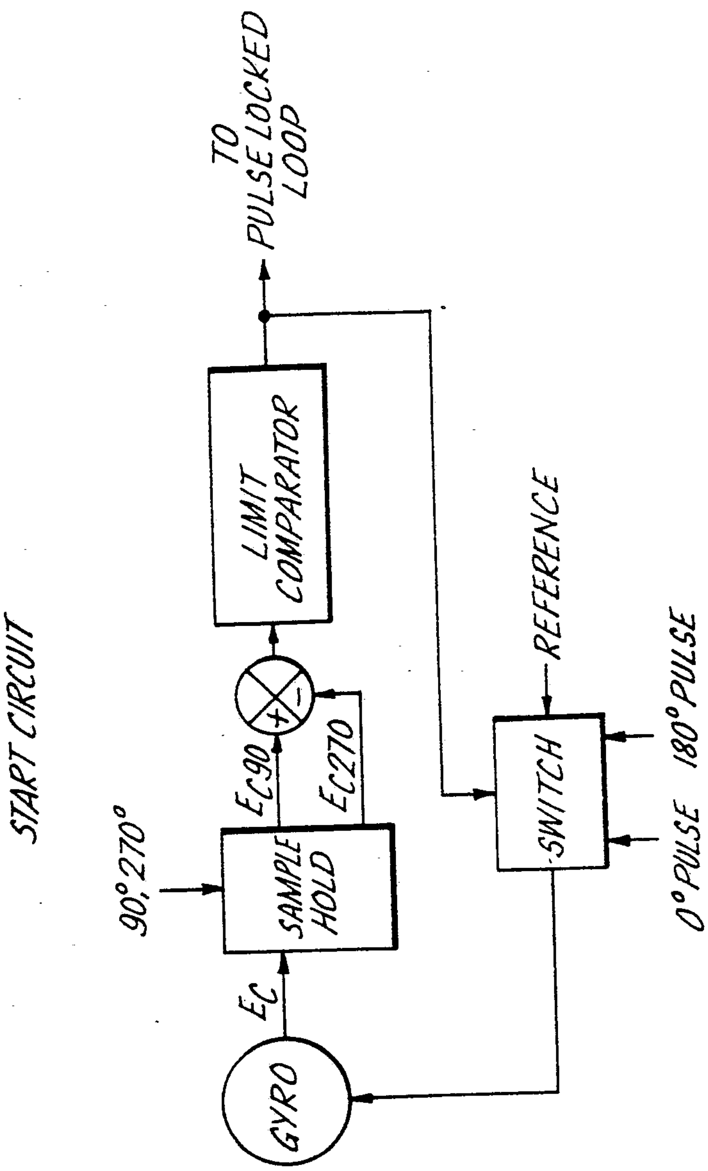

Fig.9D.
QUADRATURE DETECTOR

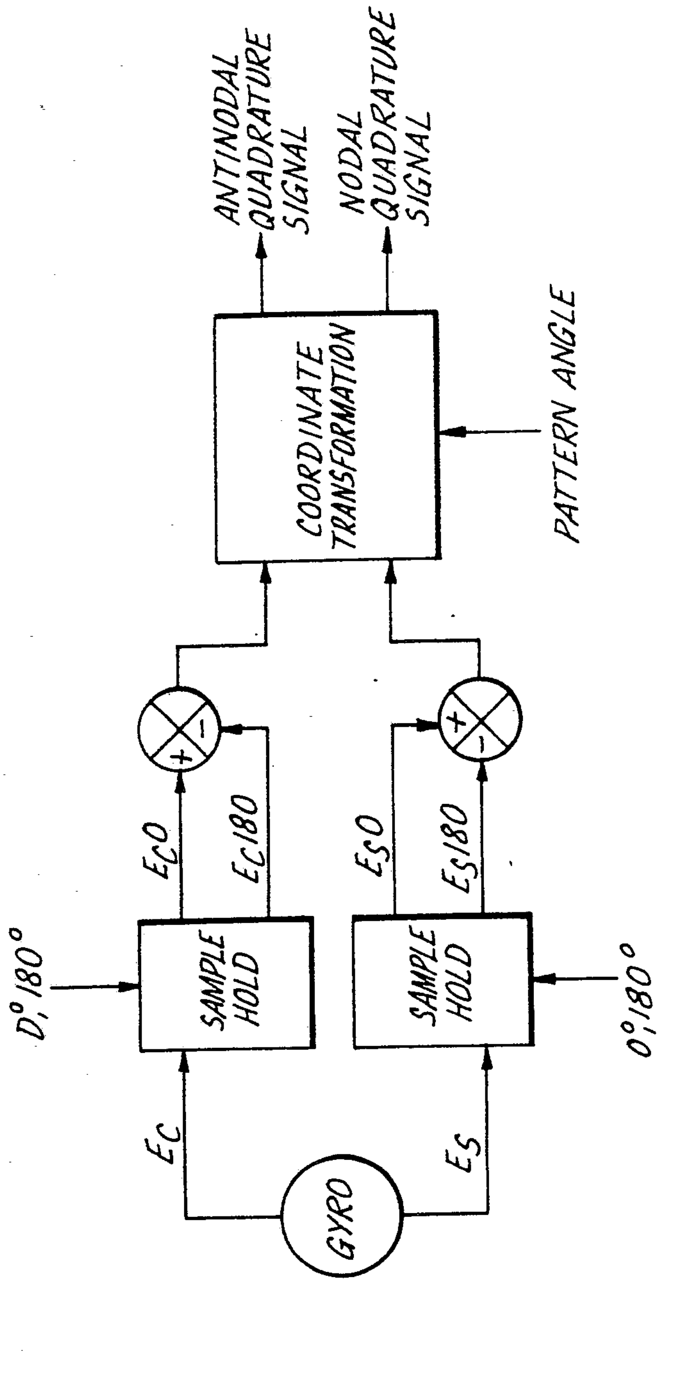

Fig. 9E.

LOGIC CONTROL; PHASE LOCKED LOOP

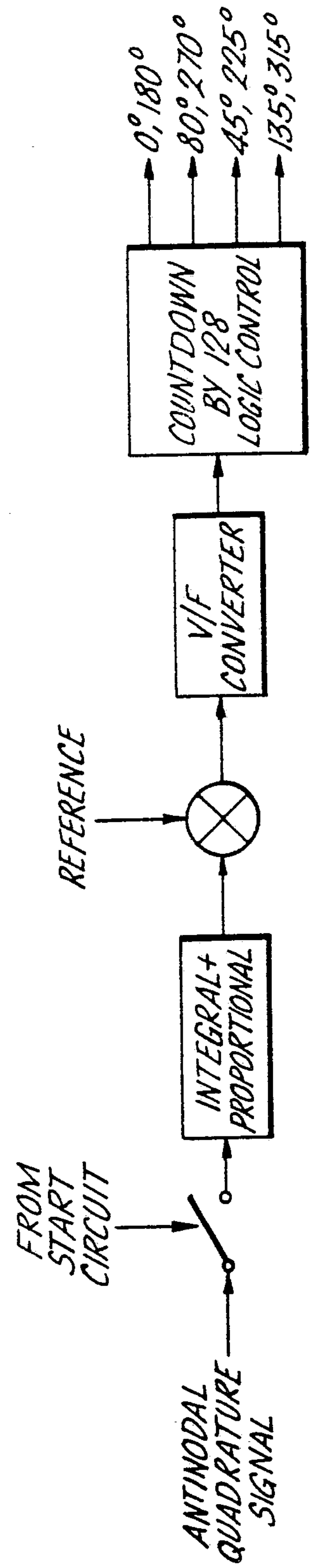

Fig. 9F.

RESONATOR QUADRATURE CONTROL